# EUROPEAN PATENT APPLICATION

(11) **EP 2 823 922 A1**
(43) Date of publication of application: **14.01.2015**
(21) Application number: 14002278.1
(22) Date of filing: 02.07.2014
(51) Int. Cl.: B23B 51/04

(54) **Hole cutter**

(30) Priority: 02.07.2013 US 201361841998 P
(71) Applicant: Irwin Industrial Tool Company, Huntersville, NC 28078 (US)
(72) Inventor: Novak, Joseph, East Longmeadow, MA 01028 (US); Korb, William, Melrose, CT 06016 (US)
(74) Representative: Schmid, Nils T.F.

(57) **Abstract**

A hole cutter has a substantially cylindrical blade body that defines an interior surface and an exterior surface that is located on an opposite side of the blade body relative to the interior surface. A cutting edge is located at one end of the blade body that generates swarf in cutting the work piece. A pattern is formed on the exterior and/or interior surfaces of the blade body. The pattern is configured to direct swarf generated at the cutting edge through the path and away from the cutting edge.

## Description

### CROSS-REFERENCE TO RELATED APPLICATION

This patent application claims benefit under 35 U.S.C. § 119 to similarly-titled U.S. Provisional Patent Application No. 61/841,998, filed on July 2, 2013, which is hereby incorporated by reference in its entirety as part of the present disclosure.

### FIELD OF THE INVENTION

The present invention relates to hole cutters, and more particularly, to hole cutters with blade bodies and patterns formed on exterior and/or interior surfaces of the blade bodies, such as patterns that define paths configured to direct swarf away from cutting edges of the hole cutters.

### BACKGROUND OF THE INVENTION

A typical prior art hole cutter (or "hole saw") includes a cylindrical blade body defining a plurality of saw teeth on the cutting edge of the blade body. Hole cutters defining relatively thin blade bodies, such as blade bodies that are about 0.042 inch thick or less, tend to cut the same work pieces faster than hole cutters with relatively thick blade bodies, such as blade bodies that are about 0.050 inch thick or greater. Hole cutters with thicker blade bodies, on the other hand, tend to be more robust than hole cutters within thinner blade bodies.

It is an object of the invention to overcome one or more of the above-described drawbacks and/or disadvantages of the prior art.

### SUMMARY OF THE INVENTION

In accordance with one aspect, the present invention is directed to a hole cutter for cutting a work piece. The hole cutter comprises a substantially cylindrical blade body defining an interior surface and an exterior surface located on an opposite side of the blade body relative to the interior surface. A cutting edge is located at one end of the blade body and generates swarf in cutting the work piece. One or more patterns are formed on the exterior and/or interior surfaces of the blade body that define at least one path configured to direct at least some of the swarf generated at the cutting edge through the path and away from the cutting edge.

In some embodiments, the at least one path is in fluid communication with the cutting edge. In some such embodiments, the cutting edge defines a plurality of cutting teeth and gullets located between cutting teeth, and the at least one path is in fluid communication with at least one gullet and is configured to receive swarf therefrom and direct it away from the cutting edge.

In some embodiments, the pattern is defined by a plurality of raised surface areas spaced relative to each other and corresponding recessed surface areas located between adjacent raised surface areas. In some such embodiments, the plurality of raised surface areas and at least one contiguous recessed surface area cooperate to define at least one flow path. In some such embodiments, the at least one path extends angularly and axially from the cutting edge. In some such embodiments, the at least one path is spiral or helical shaped.

In some embodiments, the blade body defines at least one aperture formed through the blade body axially spaced from the cutting edge, and the at least one path extends between the cutting edge and the at least one aperture. In some such embodiments, the at least one aperture is axially elongated. In some such embodiments, the at least one aperture is an axially-elongated slot formed through the blade body and configured to receive swarf flowing from the cutting edge and (i) into the slot, and/or (ii) through the slot, to prevent the collection of such swarf within at least one of the interior of the blade body and an interface between the blade body and work piece.

In some embodiments, the cutting edge defines a kerf width, and the raised surface areas and corresponding recessed surface areas are located within or substantially within the kerf width. In some such embodiments, each raised surface area defines a crest and the contiguous recessed surface areas define roots between the crests. Each crest defines a major diameter that is within or substantially within the kerf width. The crests and roots define at least one substantially spiral or helical path configured to direct swarf therethrough and away from the cutting edge.

In some embodiments, the blade body defines an axial length, and the at least one path extends along at least about 1/3 the axial length of the blade body, preferably extends along at least about 1/2 the axial length of the blade body, more preferably extends along at least about 2/3 the axial length of the blade body, and even more preferably extends along at least about 7/8 the axial length of the blade body.

In some embodiments, a pattern defining at least one path is formed on both the exterior and interior surfaces of the blade body. In some such embodiments, each pattern is defined by a plurality of raised surface areas spaced relative to each other and corresponding recessed surface areas located between adjacent raised surface areas. The cutting edge defines a kerf width, and the raised surface areas and recessed surface areas are located within or substantially within the kerf width.

In accordance with another aspect, the present invention is directed to a hole cutter for cutting a work piece. The hole cutter comprises a substantially cylindrical blade body defining an interior surface and an exterior surface located on an opposite side of the blade body relative to the interior surface. A cutting edge is located at one end of the blade body that generates swarf in cutting the work piece. Means are formed on at least one of the exterior and interior surfaces of the blade body for defining at least one path for directing at least some of the swarf generated at the cutting edge through the path and away from the cutting edge. In some embodiments, the means is a plurality of raised surface areas spaced relative to each other and corresponding recessed surface areas located between adjacent raised surface areas.

One advantage of the present invention is that the pattern or means formed on the interior and/or exterior surfaces of the blade body is configured to direct at least some of the swarf generated at the cutting edge through the path and away from the cutting edge. Another advantage of the present invention is that it can allow a hole cutter to have a relatively thick or robust blade body while nevertheless achieving relatively fast cutting speeds similar to those encountered with prior art hole saws with thinner blade bodies.

Other objects and advantages of the present invention, and/or of the currently preferred embodiments thereof, will become more readily apparent in view of the following detailed description of the currently preferred embodiments and the accompanying drawings.

### BRIEF DESCRIPTION OF THE DRAWINGS

Figure 1 is a side view of an embodiment of a hole cutter of the present invention;
Figure 2 is a first perspective view of the hole cutter of Figure 1;
Figure 3 is a second perspective view of the hole cutter of Figure 1;
Figure 4 is a third perspective view of the hole cutter of Figure 1;
Figure 5 is a side view of another embodiment of a hole cutter of the present invention;
Figure 5A is a partial, magnified view of the hole cutter of Figure 5;
Figure 6 is a first perspective view of the hole cutter of Figure 5;
Figure 7 is a second perspective view of the hole cutter of Figure 5;
Figure 8 is a third perspective view of the hole cutter of Figure 5;
Figure 9 is a side view of another embodiment of a hole cutter of the present invention;
Figure 10 is a view of detail "A" of Figure 9 showing the pattern formed on the surface of the hole cutter;
Figure 11 is a view of detail "B" of Figure 9 showing the cutting edge of the hole cutter;
Figure 12 is a side view of a blade body of a hole cutter of the present invention prior to being formed into a cylindrical blade body shape; and
Figure 13 is a partial, magnified, somewhat schematic cross-sectional view of the blade body of Figure 12 taken along line 13-13 thereof and showing the grooved pattern formed in the exterior and interior surfaces of the blade body.

### DETAILED DESCRIPTION OF EMBODIMENTS OF THE INVENTION

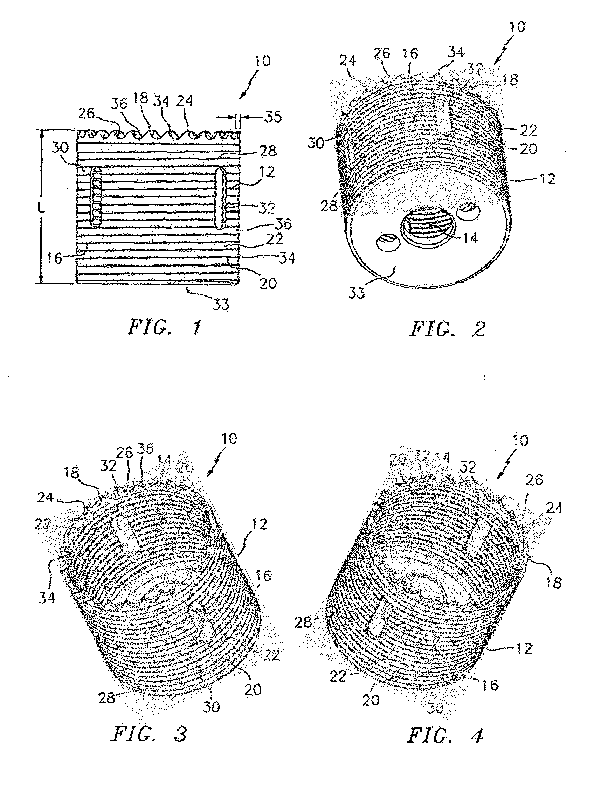

In Figures 1-4, an embodiment of a hole cutter representing the present invention is indicated generally by the reference numeral 10. The hole cutter 10 comprises a substantially cylindrical blade body 12 defining an interior surface 14 and an exterior surface 16 that is located on an opposite side of the blade body 12 relative to the interior surface 14. A cutting edge 18 is located at one end of the blade body 12 and generates swarf in cutting a work piece. Swarf is the material removed by cutting a work piece with a tool. When cutting wood work pieces with a hole cutter, the swarf comprises saw dust. When cutting metal work pieces, on the other hand, the swarf comprises metal chips. A pattern 20 is formed on the exterior surface 16 and interior surface 14 of the blade body 12 and defines a path 22 on each respective surface of the blade body 12. Each path 22 is configured to direct at least some of the swarf generated at the cutting edge 18 through the path 22 and away from the cutting edge 18. In the illustrated embodiment, the path 22 is in fluid communication with the cutting edge 18 to receive the flow of swarf therefrom during cutting.

The cutting edge 18 defines a plurality of cutting teeth 24 and gullets 26 located between cutting teeth 24. In the illustrated embodiment, the path 22 is in fluid communication with the gullets 26 and is configured to receive swarf therefrom and direct it away from the cutting edge 18 during cutting.

The pattern 20 is defined by a plurality of raised surface areas 28, which are axially spaced relative to each other, and corresponding recessed surface areas 30 located between adjacent raised surface areas 28. As shown in Figures 1-4, the pattern 20 extends approximately from the cutting edge 18 along the axial length "L" of the blade body 12.

The raised surface areas 28 and contiguous recessed surface areas 30 cooperate to define each flow path 22. As can be seen, each path 22 extends angularly and axially from the cutting edge 18, and is spiral or helical shaped. However, as may be recognized by those of ordinary skill in the pertinent art based on the teachings herein, this particular shape of the path 22 is only exemplary, and the path 22 may take any numerous different shapes or forms that are currently known, or that later become known.

As shown in Figures 1-4, the blade body 12 defines a plurality of apertures 32 formed through the blade body 12. In the illustrated embodiment, the blade body 12 defines four apertures 32 that are angularly spaced by about 90° relative to each other. The apertures 32 are axially spaced from the cutting edge 18, and each path 22 extends between the cutting edge 18 and each aperture 32, across each aperture 32, and between each aperture 32 and an end cap 33 of the hole cutter 10. Each aperture 32 is an axially-elongated slot formed through the blade body 12 and configured to receive swarf flowing from the cutting edge 18 and (i) into the slot, and/or (ii) through the slot, to prevent the collection of such swarf within the interior of the blade body 12 and/or an interface between the blade body 12 and work piece. As may be recognized by those of ordinary skill in the pertinent art based on the teachings herein, the number, shape, size, spacing relative to each other, and locations of apertures of the illustrated embodiment are only exemplary, and the apertures may take any of numerous different numbers, shapes, sizes, spacings relative to each other, and/or configurations that are currently known, or that later become known. Alternatively, a hole cutter may not include any apertures at all.

As shown typically in Figure 1, the cutting edge 18 defines a kerf width 35. The kerf is the cut or incision made by a hole cutter in a work piece, such as a wood work piece, and the kerf width is the width of the cut or incision in the work piece. The kerf width is defined by the width of the cutting edge 18. The pattern 20, including the raised surfaces areas 28 and corresponding recessed surface areas 30, are located within, or substantially within the kerf width 35. Locating the raised surfaces areas 28 of the pattern 20 within the kerf width 35 facilitates in preventing undesirable frictional engagement between the pattern 20 and the work piece, such as by frictionally engaging the work piece or forming threads in a work piece. In the illustrated embodiment, each raised surface area 28 defines a crest 34 at its highest or outermost point, and the contiguous recessed surface areas 30 define roots 36 between the crests 34. The crests 34 define a respective major diameter and the roots 36 define a respective minor diameter. The major diameter of the crests 34 on the exterior surface of the blade body is the widest diameter of the pattern 20. The minor diameter is the distance between the roots 36. In the illustrated embodiment, where the pattern 20 is formed on both the exterior surface 16 and interior surface 14 of the blade body 12, the distance between the crests 34 on the exterior surface 16 of the blade body 12 and the crests 34 on the interior surface 14 of the blade body 12, is not greater than, and is preferably less than, the kerf width 35. If the pattern 20 is formed on only one of the interior surface 14 and exterior surface 16 of the blade body 12, then the distance between the crests 34 and the opposite surface of the blade body 12 is not greater than, and is preferably less than, the kerf width 35. In one exemplary embodiment, the kerf width 35 is within the range of about 0.05 to about 0.08 inch, and the distance between crests 34 on the exterior surface 16 and interior surface 14 is within the range of about 0.045 inch to about 0.075 inch. In another embodiment, the distance between each crest 34 and the respective root 36 is within the range of about 0.007 inch to about 0.008 inch.

As can be seen, the crests 34 and roots 36 define a substantially spiral or helical path 22 extending axially and angularly about the blade body 12 that is configured to direct swarf from the cutting edge 18 therethrough and away from the cutting edge 18. As shown in Figure 1, the blade body 12 defines an axial length "L." The path 22 preferably extends along at least about one third (1/3) the axial length L of the blade body 12, more preferably extends along at least about one half (1/2) the axial length L of the blade body 12, more preferably extends along at least about two thirds (2/3) the axial length L of the blade body 12, and even more preferably extends along at least about seven eights (7/8) the axial length L of the blade body 12.

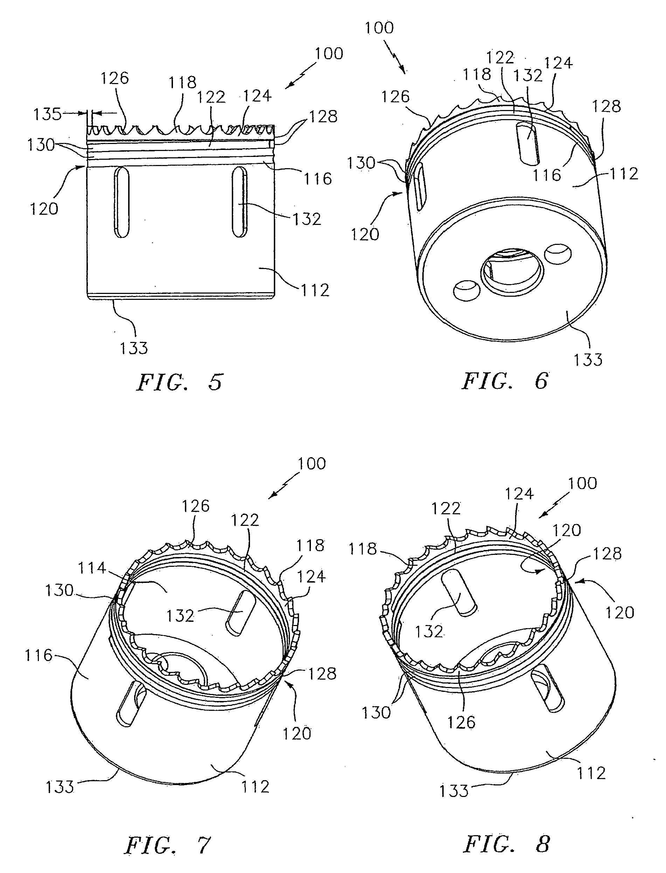

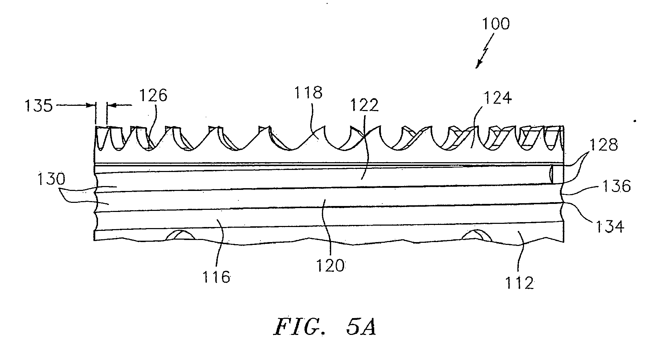

Figures 5-8 illustrate another embodiment of a hole cutter indicated generally by reference number 100. The hole cutter 100 is substantially similar to the hole cutter 10 described above in connection with Figures 1-4, and therefore like reference numerals preceded by the numeral "1" are used to indicate like elements. The blade body 112 defines an interior surface 114, an exterior surface 116, a cutting edge 118, a plurality of angularly spaced, axially-elongated apertures 132, and a pattern 120 formed on each of the exterior surface 116 and interior surface 114. As can be seen, one difference between the hole cutter 100 and the hole cutter 10 is that the pattern 120 of the hole cutter 100 extends axially between the cutting edge 118 and an inlet end or cutting-edge end of each aperture 132. In the illustrated embodiment, the pattern 120 is defined by a plurality of axially-spaced raised surface areas 128 and corresponding recessed surface areas 130 formed between adjacent raised surface areas 128. The raised surfaces areas 128 and corresponding recessed surfaces areas 130 define respective flow paths 122 that extend angularly and axially substantially between the cutting edge 118 and an inlet end or cutting-edge end of each aperture 132. As may be recognized by those of ordinary skill in the pertinent art based on the teachings herein, the location of the pattern, and the configuration of the pattern, is only exemplary, and may take any of numerous different locations and/or configurations that are currently known, or that later become known. For example, the location of the pattern 122 may be present on only the interior surface 114 or the exterior surface 116, or the pattern 122 may define a configuration other than a spiral or a helix.

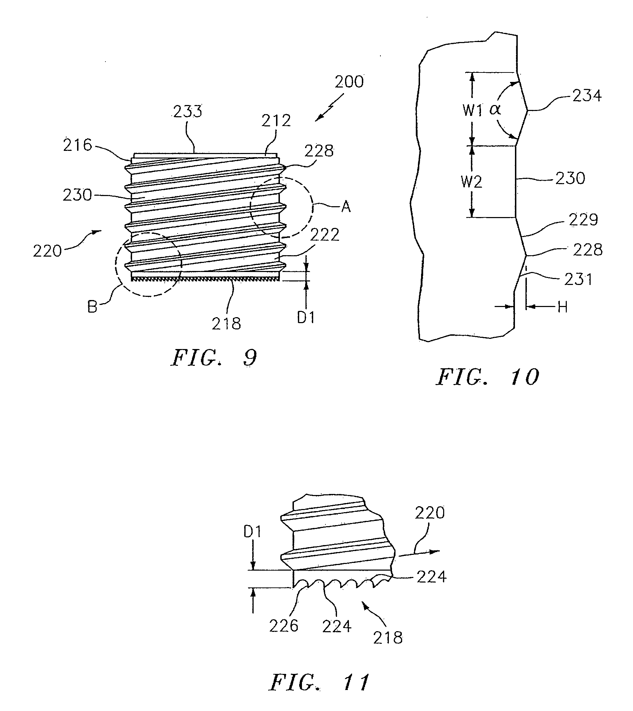

In Figure 9, another embodiment of a hole cutter of the present invention is indicated generally by the reference numeral 200. The hole cutter 200 is substantially similar to the hole cutters 10 and 100 described above, and therefore like reference numerals preceded by the numeral "2", or preceded by the numeral "2" instead of the numeral "1", are used to indicate like elements. The hole cutter 200 includes a blade body 212 defining a pattern 220 formed on an exterior surface 228 of the blade body 212. In the illustrated embodiment, the pattern 220 is axially spaced a distance "D1" from the tips of the teeth 224 (see Figure 11) and defines a right-handed thread with respect to the rake faces 226 (see Figure 11) of the teeth 224. In the illustrated embodiment, the distance D1 is within the range of about one sixteenth (1/16) inch to about three sixteenth (3/16) inch, and is preferably about one eighth (1/8) inch. However, as may be recognized by those of ordinary skill in the pertinent art based on the teachings herein, the distance D1 may take any of numerous other dimensions. As depicted, the pattern 220 is formed by a spiral or helical shaped raised surface area 228, which is substantially V-shaped in cross-section, and a contiguous recessed surface area 230 that cooperates with the raised surface area 228 to define a spiral or helical flow path 222. The raised surface area 228 defines an axial width that is about equal to the axial width of the corresponding recessed surface area 230. However, as may be recognized by those of ordinary skill in the pertinent art based on the teachings herein, the raised surface areas 228 and corresponding recessed surface areas 230 may define different widths, and otherwise may define different relative dimensions, shapes and configurations, than that shown.

As shown in Figure 10, the widths W1 and W2 of the raised surface areas 228 and the recessed surface areas 230, respectively, are approximately the same. In some embodiments, the widths W1 and W2 are approximately 0.125 inch. Also in some embodiments, the heights H of the crests 234 of the raised surface areas 228 from the recessed surface areas or roots 230 are within the range of about 0.01 inch to about 0.02 inch, and are preferably about 0.015 inch. The included angle α between the sidewalls 229, 231 of the V-shaped raised surface area 228 is within the range of about one hundred thirty-five degrees (135°) to about one hundred seventy-five degrees (175°), and is preferably about one hundred fifty-five degrees (155°). In the illustrated embodiment, the pattern 220 defines a "TPI" of about eight (8) threads per inch and the blade body 212 defines a "Rockwell C" hardness of about 35 HRc. However, as may be recognized by those of ordinary skill in the pertinent art based on the teachings herein, the distance D, the widths W1 and W2 (which need not necessarily be the same), the height H, the tolerances, the angle α, the TPI, and the hardness, are only exemplary, and may alternatively take any of numerous different values that may be desired or otherwise required.

As indicated in Figure 11, the pattern 220 defines a right-handed thread with respect to the rake faces 226 of the teeth 224 of the cutting edge 218. As may be recognized by those of ordinary skill in the pertinent art based on the teachings herein, this type of pattern and its right-handed thread configuration are only exemplary, and the pattern may take any of numerous different configurations that are currently known or that later become known.

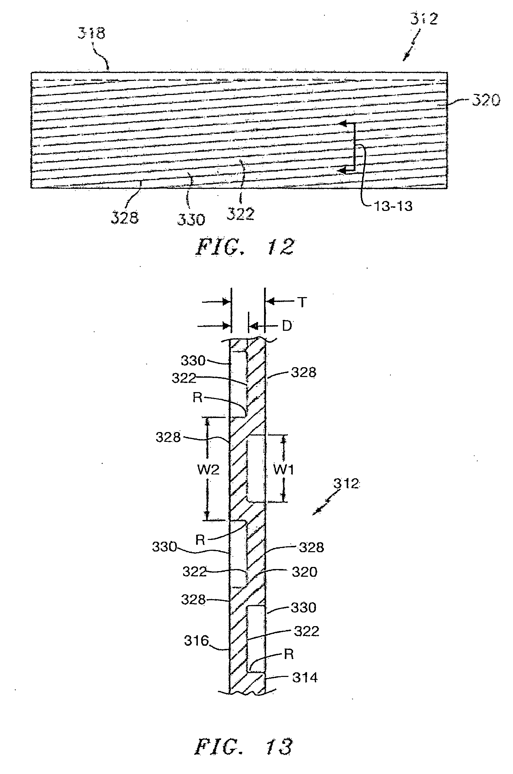

Figure 12 illustrates another embodiment of a blade body of a hole cutter of the present invention where the blade body is shown in a flat configuration prior to being formed into a cylindrical shape. The blade body 312 is substantially similar to the blade bodies 12, 112, and 212, of hole cutters 10, 100, and 200, respectively, described above, and therefore like reference numerals proceed by the numeral "3", or preceded by the numeral "3" instead of the numerals "1" or "2", are used to indicate like elements. The blade body 312 defines a pattern 320, which can be formed using, for example, an end mill or a slitting saw, that extends angularly and axially from a cutting edge 318 of the blade body 312.

As shown in Figure 13, the pattern 320 is formed on both an interior surface 314 and an exterior surface 316 of the blade body 312. The pattern 320 defines substantially rectangular or U-shaped recessed surface areas 330 with corresponding relatively raised surface areas 328 extending between the recessed surface areas. The recessed surface areas 330 extend angularly and axially from the cutting edge 318 in a spiral or helical pattern. As shown in Figure 12, the recessed surfaces areas 330 extend angularly at an acute angle relative to the cutting edge 318. In the illustrated embodiment, the acute angle is within the range of about two degrees (2°) to about eight degrees (8°), and is preferably about five degrees (5°). However, as may be recognized by those of ordinary skill in the pertinent art based on these teachings herein, such angles are exemplary and may take any of numerous different values desired or otherwise required. The blade body 312 defines a thickness T, each recessed surface area 330 defines a width W1, a depth D and a radius R at the corner of each base and side wall of the respective recess surface area 330, and each corresponding raised surface area 328 defines a width W2. In one embodiment, the blade body thickness T is about 0.05 inch, each recessed surface area 330 defines a width W1 of about 0.1 inch, a depth D of about 0.025 inch, and radii R of about 0.005 inch, and each relatively raised surface area 328 defines a width W2 of about 0.15 inch.

As may be recognized by those of ordinary skill in the pertinent art based on the teachings herein, the shape of the pattern and indicated dimensions of the hole cutters are only exemplary and may take any of any numerous different shapes or dimensions desired or otherwise required. For example, in some embodiments, the thickness T of the blade body is within the range of about 0.035 inch to about 0.075 inch, is preferably within the range of about 0.045 inch to about 0.065 inch, and is more preferably within the range of about 0.05 inch to about 0.06 inch. Similarly, in some embodiments, the distance between the crest of each raised surface area and the root of the corresponding recessed surface area is less than about 0.025 inch, in some such embodiments is less than about 0.01 inch, and in some such embodiments is within the range of about 0.007 to about 0.008 inch. In some embodiments, the distance between the crest of each raised surface area and the root of the corresponding recessed surface area is within the range of about 0.01 to about 0.02 inch, and in some such embodiments, is about 0.015 inch. As indicated above, one advantage of the present invention is that it can enable the hole cutter to achieve relatively fast cutting speeds similar to those encountered with prior art hole cutters with thinner blade blades. Accordingly, the invention may be incorporated into relatively thin blade body hole cutters to enhance cutting speed, such as hole cutters defining blade body thicknesses of less than about 0.05 inch, in some cases defining blade body thicknesses of less than about 0.45 inch, such as about 0.042 inch, and in some cases defining blade body thicknesses of less than about 0.04 inch, such as about 0.035 inch. On the other hand, the invention may be incorporated into hole cutters defining thicker blade bodies to achieve both a relatively sturdy or robust blade body, and relatively fast cutting speeds in comparison to prior art hole cutters with blade bodies of comparable thicknesses. For example, the hole cutters of the invention may define blade body thicknesses of about 0.05 inch or greater, such as within the range of about 0.05 inch to about 0.075 inch, or in some such cases, within the range of about 0.05 inch to about 0.06 inch.

As may be recognized by those of ordinary skill in the pertinent art based on the teachings herein, numerous changes and modifications may be made to the above-described and other embodiments of the present invention without departing from its scope as defined in the claims. For example, the hole cutters may take the form of, or may include any of numerous different features found in, any of numerous different hole cutters that are currently known, or that later become known, including without limitation any of the teachings in the following patent applications assigned to the assignee of the present invention, and each of which is hereby expressly incorporated by reference in its entirety as part of the present disclosure: U.S. Patent Application Publication Nos. 2011/0170965, 2011/0170969, 2011/0170972, 2011/0170970, 2011/0170971, 2011/0170967. In addition, the pattern may be formed on both of, or only one of the exterior or interior surfaces of a blade body, and the pattern may be different on one surface as compared to the other, such as by defining a different shape, configuration and/or axial length. In addition, the pattern may define a wavy path, or a path that extends angularly, but not annularly about the blade body. Further, the cutting edge may take any of numerous different forms that are currently known, or that later become known, and may be configured for cutting any of numerous different materials, such as woods, metals and/or synthetic materials, and/or any desired mixture or combinations of any materials. Accordingly, this detailed description of embodiments is to be taken in an illustrative, as opposed to a limiting sense.

The features disclosed in the above description, the figures and the claims may be significant for the realisation of the invention in its different embodiments individually as in any combination.

### LIST OF REFERENCE NUMERALS

- 10, 100, 200: hole cutter
- 12, 112, 212, 312: blade body
- 14, 114, 214, 314: interior surface
- 16, 116, 216, 316: exterior surface
- 18, 118, 218, 318: cutting edge
- 20, 120, 220, 320: pattern
- 22, 122, 222: path
- 24, 124, 224: cutting teeth
- 26, 126, 226: gullets
- 28, 128, 228, 328: raised surface areas
- 30, 130, 230, 330: recessed surface areas
- 32, 132, 232: apertures
- 33, 133, 233: end cap
- 34, 134, 234: crest
- 35, 135, 235: kerf width
- 36, 136, 236: roots
- 229, 231: side walls
- W1: width
- W2: width
- L: axial length
- H: height
- T: thickness
- D: depth
- R: radius

## Claims

1. A hole cutter (10, 100, 200) for cutting a work piece, comprising:
a substantially cylindrical blade body (12, 112, 212, 312) defining an interior surface (14, 114, 214, 314) and an exterior surface (16, 116, 216, 316) located on an opposite side of the blade body (12, 112, 212, 312) relative to the interior surface (14, 114, 214, 314);
a cutting edge (18, 118, 218, 318) located at one end of the blade body (12, 112, 212, 312) that generates swarf in cutting the work piece; and
a pattern(20, 120, 220, 320) formed on at least one of the exterior and interior surfaces of the blade body (12, 112, 212, 312) and defining at least one path (22, 122, 222), wherein the at least one path is configured to direct at least some of the swarf generated at the cutting edge (18, 118, 218, 318) through the path (22, 122, 222) and away from the cutting edge (18, 118,218,318).

2. A hole cutter (10, 100, 200) as defined in claim 1, wherein the at least one path (22, 122, 222) is in fluid communication with the cutting edge (18, 118, 218, 318).

3. A hole cutter (10, 100, 200) as defined in claim 1 or 2, wherein the cutting edge (18, 118, 218, 318) defines a plurality of cutting teeth (24, 124, 224) and gullets (26, 126, 226) located between cutting teeth (24, 124, 224), and the at least one path (22, 122, 222) is in fluid communication with at least one gullet (26, 126, 226) and is configured to receive swarf therefrom and direct the swarf away from the cutting edge (18, 118, 218, 318).

4. A hole cutter (10, 100, 200) as defined in one of the preceding claims, wherein the pattern (20, 120, 220, 320) is defined by a plurality of raised surface areas (28, 128, 228, 328) spaced relative to each other and corresponding recessed surface areas (30, 130, ,230, 330) located between adjacent raised surface areas (28, 128, 228, 328), and/or wherein a plurality of raised surface areas (28, 128, 228, 328) and at least one contiguous recessed surface area (30, 130, 230, 330) cooperate to define at least one flow path, wherein the at least one path (22, 122, 222) extends angularly and axially from the cutting edge (18, 118, 218, 318), wherein particularly the at least one path (22, 122, 222) is spiral or helical shaped.

5. A hole cutter (10, 100, 200) as defined in one of the preceding claims, wherein the blade body (12, 112, 212, 312) defines at least one aperture (32, 132, 332) formed through the blade body (12, 112, 212, 312) axially spaced from the cutting edge (18, 118, 218, 318), and the at least one path (22, 122, 222) extends between the cutting edge (18, 118, 218, 318) and the at least one aperture (32, 132, 232), wherein particularly the at least one aperture (32, 132, 232) is axially elongated, wherein particularly the at least one aperture (32, 132, 232) is an axially-elongated slot formed through the blade body (12, 112, 212, 312) and configured to receive swarf flowing from the cutting edge (18, 118, 218, 318) and at least one of (i) into the slot, and (ii) through the slot, to prevent the collection of such swarf within at least one of the interior of the blade body (12, 112, 212, 312) and an interface between the blade body (12, 112, 212, 312) and work piece.

6. A hole cutter (10, 100, 200) as defined in one of the preceding claims, wherein the cutting edge (18, 118, 218, 318) defines a kerf width (35, 135, 235), and the raised surface areas (28, 128, 228, 328) and corresponding recessed surface areas (30, 130, 230, 330) are located within the kerf width (35, 135, 235).

7. A hole cutter (10, 100, 200) as defined in one of the preceding claims, wherein each raised surface area (28, 128, 228, 328) defines a crest and the contiguous recessed surface areas (30, 130, 230, 330) define roots between the crests (34, 134, 234), wherein particularly each crest (34, 134, 234) defines a major diameter that is within the kerf width (35, 135, 235), and/or wherein the crests (34, 134, 234) and roots (36, 136, 236) define at least one substantially spiral or helical path configured to direct the swarf therethrough and away from the cutting edge (18, 118, 218, 318).

8. A hole cutter (10, 100, 200) as defined in one of the preceding claims, wherein the blade body (12, 112, 212, 312) defines an axial length (L), and the at least one path (22, 122, 222) extends along at least about 1/3 the axial length (L) of the blade body (12, 112, 212, 312).

9. A hole cutter (10, 100, 200) as defined in one of the preceding claims, wherein the at least one path (22, 122, 222) extends along at least about 1/2 the axial length (L) of the blade body (12, 112, 212, 312).

10. A hole cutter (10, 100, 200)) as defined in one of the preceding claims, wherein the at least one path (22, 122, 222) extends along at least about 2/3 the axial length (L) of the blade body (12, 112, 212, 312).

11. A hole cutter (10, 100, 200) as defined in one of the preceding claims, wherein the at least one path (22, 122, 222) extends along at least about 7/8 the axial length (L) of the blade body (12, 112, 212, 312).

12. A hole cutter (10, 100, 200) as defined in one of the preceding claims, wherein a pattern defining at least one path (22, 122, 222) is formed on both the exterior and interior surfaces of the blade body (12, 112, 212, 312).

13. A hole cutter (10, 100, 200) as defined in claim 12, wherein each pattern (20, 120, 220, 320) is defined by a plurality of raised surface areas (28, 128, 228, 328) spaced relative to each other and corresponding recessed surface areas (30, 130, 230, 330) located between adjacent raised surface areas (28, 128, 228, 328), the cutting edge (18, 118, 218, 318) defines a kerf width (35, 135, 235), and the raised surface areas (28, 128, 228, 328) and recessed surface areas (30, 130, 230, 330) are located within the kerf width (35, 135, 235).

14. A hole cutter (10, 100, 200) for cutting a work piece, comprising:
a substantially cylindrical blade body (12, 112, 212, 312) defining an interior surface (14, 114, 214, 314) and an exterior surface (16, 116, 216, 316) located on an opposite side of the blade body (12, 112, 212, 312) relative to the interior surface (14, 114, 214, 314);
a cutting edge (18, 118, 218, 318) locating at one end of the blade body (12, 112, 212, 312) that generates swarf in cutting the work piece; and
means formed on at least one of the exterior and interior surfaces of the blade body (12, 112, 212, 312) and defining at least one path (22, 122, 222) for directing at least some of the swarf generated at the cutting edge (18, 118, 218, 318) through the path (22, 122, 222) and away from the cutting edge (18, 118, 218, 318).

15. A hole cutter (10, 100, 200) as defined in claim 14, wherein the means is a plurality of raised surface areas (28, 128, 228, 328) spaced relative to each other and corresponding recessed surface areas (30, 130, 230, 330) located between adjacent raised surface areas (28, 128, 228, 328).
